# EUROPEAN PATENT APPLICATION

(11) **EP 4 524 684 A1**
(43) Date of publication of application: **19.03.2025**
(21) Application number: 24745338.4
(22) Date of filing: 16.07.2024
(51) Int. Cl.: G06F 1/3234, G06F 1/3218, G06F 3/14, H04N 5/63

(54) **DISPLAY DEVICE FOR CONTROLLING POWER SUPPLY, MODULAR DISPLAY DEVICE, AND CONTROL METHOD THEREFOR**

(30) Priority: 26.07.2023 KR 20230097486
(71) Applicant: Samsung Electronics Co., Ltd, Suwon-si, Gyeonggi-do 16677 (KR)
(72) Inventor: KIM, Sangwon, Suwon-si Gyeonggi-do 16677 (KR); OK, Sungook, Suwon-si Gyeonggi-do 16677 (KR); JIN, Suhwan, Suwon-si Gyeonggi-do 16677 (KR); YI, Sanghun, Suwon-si Gyeonggi-do 16677 (KR)
(74) Representative: Gulde & Partner
(86) International application number: PCT/KR2024/010213
(87) International publication number: WO 2025/023603

(57) **Abstract**

A display apparatus is disclosed. The display apparatus is included in a modular display apparatus and comprises at least one display module, a power supply that supplies a direct current power to the at least one display module, and at least one processor configured to, based on a direct current power output by the power supply being smaller than a threshold value, transmit a detection signal to a controller of the modular display apparatus, and based on receiving a control signal from the controller, turn off the supply of the direct current power output by the power supply to the at least one display module based on the control signal.

## Description

### [Technical Field]

The disclosure relates to a display apparatus, a modular display apparatus, and a control method thereof, and more particularly, to a display apparatus that controls power supplied to a display module included in the display apparatus, a modular display apparatus including a plurality of display apparatuses, and a control method thereof.

### [Background Art]

Recently, there is a trend that display systems in various forms are being developed and distributed.

In particular, as a display system has become larger and its resolution has become higher, the number of display modules and display apparatuses constituting the display system is increasing in proportion thereto.

In the case of a modular display apparatus, the size and the form of the modular display apparatus may be changed variously according to the number of display apparatuses constituting the modular display apparatus, the sizes of the display apparatuses, etc.

Meanwhile, each of a plurality of display apparatuses included in a modular display apparatus has a deviation in a change of a direct current power (e.g., reduction of a direct current power, etc.) supplied from a corresponding power supply, and thus there is a problem that a phenomenon occurs, according to which each of a plurality of areas inside the screen of the modular display apparatus has a different brightness.

For example, as a time point when a first display apparatus is turned off and a time point when a second display apparatus is turned off are different, there is a problem that an area corresponding to the first display apparatus and an area corresponding to the second display apparatus have different brightnesses during a specific time period.

### [Disclosure]

### [Technical Solution]

A display apparatus included in a modular display apparatus according to an embodiment for achieving the aforementioned purpose of the disclosure includes at least one display module, a power supply that supplies a direct current power to the at least one display module, and at least one processor configured to, based on the direct current power output by the power supply being smaller than a threshold value, transmit a detection signal to a controller of the modular display apparatus, and based on receiving a control signal from the controller, turn off the supply of the direct current power output by the power supply to the at least one display module based on the control signal.

A modular display apparatus according to an embodiment for achieving the aforementioned purpose of the disclosure includes at least one display apparatus and a controller, wherein the at least one display apparatus includes at least one display module, a power supply that supplies a direct current power to the at least one display module, and at least one processor, and the at least one processor is configured to detect the direct current power output by the power supply, and based on the direct current power being smaller than a threshold value, transmit a detection signal to a controller of the modular display apparatus, and the controller is configured to, based on receiving the detection signal from the at least one processor included in the at least one display apparatus, transmit a control signal to the at least one display apparatus.

A control method of a display apparatus included in a modular display apparatus according to an embodiment for achieving the aforementioned purpose of the disclosure includes the steps of, based on the direct current power output by a power supply corresponding to the display apparatus being smaller than a threshold value, transmitting a detection signal to a controller of the modular display apparatus, and based on a control signal being received from the controller, turning off the supply of the direct current power output by the power supply to at least one display module included in the display apparatus based on the control signal.

In a computer-readable recording medium including a program executing a control method of a display apparatus included in a modular display apparatus according to an embodiment for achieving the aforementioned purpose of the disclosure, the control method of a display apparatus includes the steps of, based on the direct current power output by a power supply corresponding to the display apparatus being smaller than a threshold value, transmitting a detection signal to a controller of the modular display apparatus, and based on a control signal being received from the controller, turning off the supply of the direct current power output by the power supply to at least one display module included in the display apparatus based on the control signal.

### [Description of Drawings]

FIG. 1 is a diagram for illustrating a modular display apparatus that displays an image according to an embodiment of the disclosure;
FIG. 2 is a diagram for illustrating a modular display apparatus wherein a plurality of display apparatuses are combined according to an embodiment of the disclosure;
FIG. 3 is a block diagram for illustrating a modular display apparatus according to an embodiment of the disclosure;
FIG. 4 is a block diagram for illustrating a display apparatus according to an embodiment of the disclosure;
FIG. 5 is a diagram for illustrating a flow of a detection signal and a control signal according to an embodiment of the disclosure;
FIG. 6 is a diagram for illustrating a detection signal of a controller according to an embodiment of the disclosure;
FIG. 7 is a diagram for illustrating a flow of a control signal among a plurality of controllers according to an embodiment of the disclosure;
FIG. 8 is a diagram for illustrating a rear surface of a modular display apparatus according to an embodiment of the disclosure;
FIG. 9 is a graph for illustrating a change of a direct current power according to an embodiment of the disclosure; and
FIG. 10 is a flow chart for illustrating a control method of a display apparatus according to an embodiment of the disclosure.

### [Detailed Description of Exemplary Embodiments]

First, the terms used in this specification will be described briefly, and then the disclosure will be described in detail.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, or alternatives of the embodiments included in the ideas and the technical scopes disclosed herein. Meanwhile, in case it is determined that in describing embodiments, detailed explanation of related known technologies may unnecessarily confuse the gist of the disclosure, the detailed explanation will be omitted.

In addition, terms such as "first," "second," and the like may be used to describe various elements, but the terms are not intended to limit the elements. Such terms are used only to distinguish one element from another element.

Further, singular expressions include plural expressions, as long as they do not obviously mean differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Also, in the disclosure, "a module" or "a part" performs at least one function or operation, and may be implemented as hardware or software, or as a combination of hardware and software. Further, a plurality of "modules" or a plurality of "parts" may be integrated into at least one module and implemented as at least one processor (not shown), except "a module" or "a part" that needs to be implemented as specific hardware.

Hereinafter, the embodiments of the disclosure will be described in detail with reference to the accompanying drawings, such that those having ordinary skill in the art to which the disclosure belongs can easily carry out the disclosure. However, it should be noted that the disclosure may be implemented in various different forms, and is not limited to the embodiments described herein. Also, in the drawings, parts that are not related to explanation were omitted, for explaining the disclosure clearly, and throughout the specification, similar components were designated by similar reference numerals.

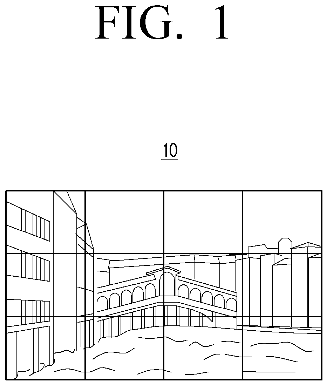

FIG. 1 is a diagram for illustrating a modular display apparatus that displays an image according to an embodiment of the disclosure.

A modular display apparatus 10 according to an embodiment of the disclosure may include a plurality of display apparatuses 100, 200, ...

For example, referring to FIG. 1, the modular display apparatus 10 according to an embodiment of the disclosure may include a plurality of display apparatus 100, 200, ... and each of the plurality of display apparatus 100, 200, ... may be connected by various methods (e.g., a daisy chain method), and constitute one display apparatus, i.e., the modular display apparatus 10.

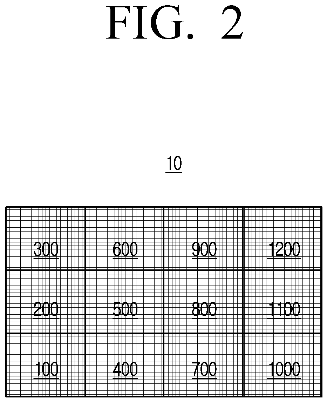

FIG. 2 is a diagram for illustrating a modular display apparatus wherein a plurality of display apparatuses are combined according to an embodiment of the disclosure.

Referring to FIG. 2, the modular display apparatus 10 may include a plurality of display apparatuses 100, 200, ..., 1000 and the modular display apparatus 10 may display an image by using the plurality of display apparatuses 100, 200, ..., 1000.

For example, the modular display apparatus 10 may include the plurality of display apparatuses 100, 200, ..., 1000 arranged in a matrix form (e.g., a 4x3 form). Meanwhile, the 4x3 form is merely an example for the convenience of explanation, and the arrangement form, the number, etc. of the plurality of display apparatuses 100, 200, ..., 1000 constituting the modular display apparatus 10 may be changed variously according to the specification (e.g., the resolution, the size, etc.) of the modular display apparatus 10, the manufacturing purpose of the manufacturer, the installation environment (e.g., the indoors, the outdoors, etc.) of the modular display apparatus 10, etc.

According to an embodiment, the modular display apparatus 10 may be implemented as a TV, but is not limited thereto, and any apparatus equipped with a display function such as a video wall, a large format display (LFD), digital signage, a digital information display (DID), a projector display, etc. can be applied without limitation.

Also, the modular display apparatus 10 may be implemented as displays in various forms such as a liquid crystal display (LCD), organic light-emitting diodes (OLEDs), liquid crystal on silicon (LCoS), digital light processing (DLP), a quantum dot (QD) display panel, quantum dot light-emitting diodes (QLEDs), etc.

Each of the plurality of display apparatuses 100, 200, ..., 1000 according to an embodiment of the disclosure may include a plurality of self-luminous elements. Here, the self-luminous elements may be at least one of light-emitting diodes (LEDs) or micro LEDs. Here, the micro LEDs are LEDs in sizes of about 5 to 100 micrometers, and are ultra mini light-emitting elements that emit light by themselves without a color filter.

According to an embodiment, each of the plurality of display apparatuses 100, 200, ..., 1000 constituting the modular display apparatus 10 may be connected to a controller, and receive a control signal, a driving signal, etc. from the controller.

According to an embodiment, the modular display apparatus 10 may include a plurality of power supplies. For example, each of the plurality of display apparatuses 100, 200, ..., 1000 included in the modular display apparatus 10 may include a power supply. However, this is merely an example, and it is obvious that some of the plurality of display apparatuses 100, 200, ..., 1000 included in the modular display apparatus 10 can be supplied with a power from a first power supply, and the others can be supplied with a power from a second power supply.

According to an embodiment, during driving of the modular display apparatus 10, each of the plurality of display apparatuses 100, 200, ..., 1000 may be supplied with a direct current (DC) power from a corresponding power supply. According to an embodiment, the plurality of power supplies included in the modular display apparatus 10 may include hardware that converts an alternating current (AC) power into a DC power, and supplies the DC power to the display apparatuses stably.

According to an embodiment, during driving of the modular display apparatus 10 (e.g., in a general mode of the modular display apparatus 10), the power supply included in each of the plurality of display apparatuses 100, 200, ..., 1000 may receive an AC power.

Each of the plurality of power supplies in the modular display apparatus 10 may convert an AC power into a DC power, and supply the power to the corresponding display apparatus.

Each of the plurality of display apparatuses 100, 200, ..., 1000 that were supplied with a DC power may display a screen corresponding to an image signal. As an example, each of the plurality of display apparatuses 100, 200, ..., 1000 may display a part of a screen corresponding to an image signal, and the modular display apparatus 10 may display the entire screen.

For example, as illustrated in FIG. 1, the controller provided in the modular display apparatus 10 may transmit an image signal corresponding to each of the plurality of display apparatuses 100, 200, ..., and when an image signal is transmitted to at least one display apparatus (e.g., the first display apparatus 100) among the plurality of display apparatuses 100, 200, ..., the at least one display apparatus may transmit the image signal to the other display apparatuses. For example, the plurality of display apparatuses 100, 200, ... may be connected according to a daisy chain method, and at least one display apparatus may sequentially transmit an image signal to the other display apparatuses according to the daisy chain method. However, the aforementioned embodiment is merely an example, and the disclosure is obviously not limited thereto.

According to an embodiment, while the modular display device 10 is being driven (e.g., in the general mode of the modular display apparatus 10), if a user input for turning off the modular display apparatus 10 is received, the modular display apparatus 10 may perform control such that each of the plurality of power supplies stops (or, turns off) reception of an AC power. For example, according to a user input for a remote control apparatus, if a user input for turning off the modular display apparatus 10 is received from the remote control apparatus, the modular display apparatus 10 may perform control such that each of the plurality of power supplies stops reception of an AC power. However, this is merely an example, and the disclosure is obviously not limited thereto.

For example, according to a user input for a source apparatus providing image signal to the modular display apparatus 10, if an image signal is not received from the source apparatus, the modular display apparatus 10 may perform control such that each of the plurality of power supplies stops reception of an AC power. For example, if an image signal is not received from the source apparatus exceeding a predetermined time, the modular display apparatus 10 may convert the modular display apparatus 10 from the general mode to a turn-off mode (or, a standby mode, a power saving mode, etc.), and perform control such that each of the plurality of power supplies stops reception of an AC power.

Meanwhile, as a time point when an output of a DC power is stopped (or, a time point when an output of a DC power is turned off) is different in each of the plurality of power supplies included in the modular display apparatus 10, there may be a problem that a time point when each of the plurality of display apparatuses 100, 200, ... is turned off is different.

For example, if there is a difference of about 35[ms] between a time point when the power supply supplying a DC power to the first display apparatus 100 stops an output of a DC power (or, a time point when the first display apparatus 100 is turned off) and a time point when the power supply supplying a DC power to the second display apparatus 200 stops an output of a DC power (or, a time point when the second display apparatus 200 is turned off), one area inside the screen of the modular display apparatus 10 (e.g., an area corresponding to the first display apparatus 100) has a brightness different from a brightness of another area (e.g., an area corresponding to the second display apparatus 200) during about 35[ms], and thus nonuniformity of the screen may be caused.

According to an embodiment, if a DC voltage output by each of the plurality of power supplies becomes lower, the brightness of each of the plurality of areas inside the modular display apparatus 10 becomes lower (or, becomes darker), and accordingly, if a time point when each of the plurality of power supplies stops an output of a DC power is different, a phenomenon according to which each of the plurality of areas in the modular display apparatus 10 has a different brightness (referred to as a brown-out) may be generated.

A brown-out (or, a brown-out function) may mean a situation or a phenomenon wherein a DC power (or, a DC voltage) output by a power supply is lower than a power (or, a voltage) required for a normal operation of a display apparatus.

According to the various embodiments of the disclosure, even if a time point when an output of a DC power is stopped in each of the plurality of power supplies included in the modular display apparatus 10 is different, a time point when each of the plurality of display apparatuses 100, 200, ..., 1000 is turned off may be controlled to be identical (or, within a threshold time).

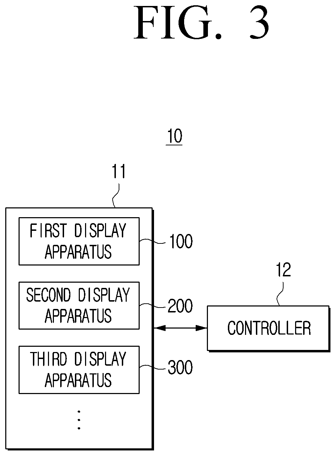

FIG. 3 is a block diagram for illustrating a modular display apparatus according to an embodiment of the disclosure.

Referring to FIG. 3, the modular display apparatus 10 includes a plurality of display apparatuses 11 (i.e. a first display apparatus 100, a second display apparatus 200, and a third display apparatus 300) and a controller 12.

Each of the plurality of display apparatuses 11 according to an embodiment of the disclosure may receive various signals from the controller 12 of the modular display apparatus 10, or transmit various signals to the controller 12.

For example, each of the plurality of display apparatuses 11 may be connected to the controller 12 via wire/wirelessly, and receive a driving signal, a control signal, etc. from the controller 12, and each of the plurality of display apparatuses 11 may transmit a detection signal to the controller 12.

However, this is merely an example, and the disclosure is obviously not limited thereto. For example, the plurality of display apparatuses 11 may be connected according to the daisy chain method. For example, the first display apparatus 100 may be connected with the second display apparatus 200, and the second display apparatus 200 may be connected with the third display apparatus 300. That is, the plurality of display apparatuses 11 may be connected consecutively. According to an embodiment, the first display apparatus 100 connected with the controller 12 may transmit various signals (e.g., a control signal, a driving signal, etc.) received from the controller 12 to the second display apparatus 200 connected to the first display apparatus 100, and may consecutively transmit the signals to the other display apparatuses 200, 300, ... connected according to the daisy chain method.

For example, an nth display apparatus among the plurality of display apparatuses 11 may transmit a detection signal to an n-1th display apparatus connected to the nth display apparatus, and the n-1th display apparatus may transmit the detection signal corresponding to the nth display apparatus and the detection signal corresponding to the n-1th display apparatus to an n-2th display apparatus connected to the n-1th display module. According to an embodiment, the first display apparatus 100 connected to the controller 12 may receive detection signals corresponding to each of the other display apparatuses 200, 300, ... connected according to the daisy chain method, and transmit the received detection signals and the detection signal corresponding to the first display apparatus 100 to the controller 12.

Here, the controller 12 of the modular display apparatus 10 includes at least one processor, and the at least one processor controls the overall operations of the modular display apparatus 10.

According to an embodiment of the disclosure, the at least one processor may be implemented as a digital signal processor (DSP) processing digital signals, a microprocessor, and a timing controller (TCON). However, the disclosure is not limited thereto, and the at least one processor may include one or more of a central processing unit (CPU), a micro controller unit (MCU), a micro processing unit (MPU), a controller, an application processor (AP) or a communication processor (CP), an ARM processor, and an artificial intelligence (AI) processor, or may be defined by the terms. Also, the at least one processor may be implemented as a system on chip (SoC) having a processing algorithm stored therein or large scale integration (LSI), or implemented in the form of a field programmable gate array (FPGA). The at least one processor may perform various functions by executing computer executable instructions stored in the memory.

The at least one processor may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the display apparatus, and perform an operation related to communication or data processing. Also, the at least one processor may execute one or more programs or instructions stored in the memory. For example, the at least one processor may perform the method according to an embodiment of the disclosure by executing at least one instruction stored in the memory.

In case the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor may be implemented as a single core processor including one core, or it may be implemented as one or more multicore processors including a plurality of cores (e.g., multicores of the same kind or multicores of different kinds). In case the at least one processor is implemented as multicore processors, each of the plurality of cores included in the multicore processors may include an internal memory of the processor such as a cache memory, an on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be implemented by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

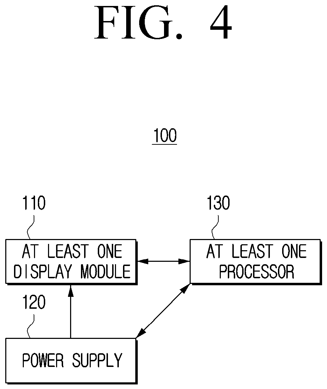

FIG. 4 is a block diagram for illustrating a display apparatus according to an embodiment of the disclosure.

Referring to FIG. 4, the first display apparatus 100 among the plurality of display apparatuses 11 includes at least one display module 110, a power supply 120, and at least one processor 130.

The first display apparatus 100 may be implemented as displays in various forms such as a liquid crystal display (LCD), an organic light-emitting diode (OLED) display, light-emitting diodes (LEDs), micro LEDs, mini LEDs, a plasma display panel (PDP), a quantum dot (QD) display, quantum dot light-emitting diodes (QLEDs), etc. Inside the display, driving circuits that may be implemented in forms such as an a-si thin-film transistor (TFT), a low temperature poly silicon (LTPS) TFT, an organic TFT (OTFT), etc., and a backlight unit, etc. may also be included. Meanwhile, the display may be implemented as a touch screen combined with a touch sensor, a flexible display, a rollable display, a 3D display, a display wherein a plurality of display modules are physically connected, etc.

The at least one display module 110 according to an embodiment may include a plurality of driver integrated circuits (ICs) and a plurality of light-emitting elements.

Each of the plurality of driver ICs may receive a driving signal from the at least one processor 130, and control corresponding light-emitting elements among the plurality of light-emitting elements based on the received driving signal.

As an example, each of the plurality of light-emitting elements may be at least one self-luminous element from among a light-emitting diode (LED) or a micro LED. Here, the micro LED is an LED in a size of about 5 to 100 micrometers, and is an ultra mini light-emitting element that emits light by itself without a color filter.

The first display apparatus 100 may include a power supply 120 for supplying a power to the components included in the first display apparatus 100 (e.g., the at least one display module 110, the at least one processor 130, etc.).

The power supply 120 according to an embodiment is hardware that converts an AC power into a DC power, and supplies the power such that the power can be used in the at least one display module 110, etc. stably.

The power supply 120 may largely consist of an AC-DC rectifier, a DC-DC switching converter, an output filter, and an outputter. The power supply 120 may be implemented as, for example, a switched mode power supply (SMPS). The SMPS is a DC stabilization power device of which output was stabilized by controlling the on-off time ratio of semiconductor switch elements, and has characteristics that high efficiency, miniaturization, and weight lightening are possible.

Meanwhile, the power supply 120 according to an embodiment of the disclosure can obviously include an input electromagnetic interference (EMI) filter part, etc. As an example, the power supply 120 may remove electric noises of a commercial power through the EMI filter part.

The at least one processor 130 according to an embodiment may be implemented as a digital signal processor (DSP) processing digital signals, a microprocessor, and a timing controller (TCON). However, the disclosure is not limited thereto, and the at least one processor 130 may include one or more of a central processing unit (CPU), a micro controller unit (MCU), a micro processing unit (MPU), a controller, an application processor (AP) or a communication processor (CP), an ARM processor, and an artificial intelligence (AI) processor, or may be defined by the terms. Also, the at least one processor 130 may be implemented as a system on chip (SoC) having a processing algorithm stored therein or large scale integration (LSI), or implemented in the form of a field programmable gate array (FPGA). Hereinafter, for the convenience of explanation, the at least one processor 130 will be assumed as a timing controller (TCON).

The at least one processor 130 according to an embodiment of the disclosure (e.g., a TCON) may generate a driving signal corresponding to the at least one display module 110 included in the first display apparatus 100 according to control by the controller 12, and transmit the generated driving signal to the at least one display module 110.

According to an embodiment, the at least one processor 130 may detect (or, identify) whether a DC power output by the power supply 120 is smaller than a threshold value.

If the DC power output by the power supply 120 is smaller than the threshold value, the at least one processor 130 may transit a detection signal to the controller 12 of the modular display apparatus 10.

According to an embodiment, if a control signal is received from the controller 12, the at least one processor 130 stops (or, turns off) supply of the DC power output by the power supply 120 to the at least one display module 110 based on the control signal.

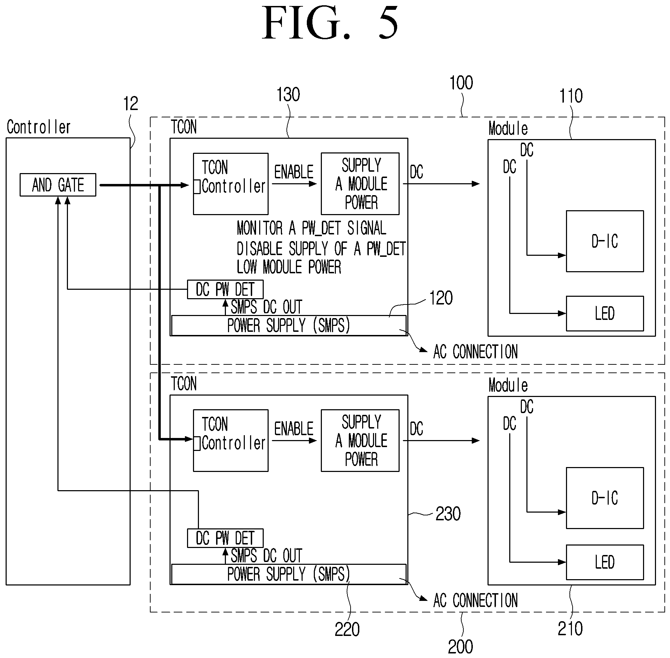

Detailed explanation in this regard will be described with reference to FIG. 5.

FIG. 5 is a diagram for illustrating a flow of a detection signal and a control signal according to an embodiment of the disclosure.

According to an embodiment, the controller 12 may turn off reception of an AC power of each of the plurality of power supplies included in the modular display apparatus 10.

For example, if a user input for turning off the modular display apparatus 10 is received, the controller 12 may turn off reception of an AC power of the power supplies included in each of the plurality of display apparatuses 11.

According to an embodiment, even if each of the plurality of power supplies included in the modular display apparatus 10 does not receive an AC power simultaneously (or, within a threshold time difference) according to control by the controller 12, as a time point when each of the plurality of power supplies included in the modular display apparatus 10 stops an output of a DC power is different, there may be a problem that a time point when each of the plurality of display apparatuses 100, 200, ... is turned off (e.g., a time point when the brightness becomes 0) is different.

For example, as a time point when the power supply 120 stops an output of a DC power as the DC power output by the power supply 120 included in the first display apparatus 100 is gradually reduced, and a time point when the power supply 220 stops an output of a DC power as the DC power output by the power supply 220 included in the second display apparatus 200 is gradually reduced are different, there is a problem that a phenomenon occurs, according to which each of the plurality of areas inside the screen has a different brightness.

According to an embodiment, the at least one processor 130 included in the first display apparatus 100 may monitor the size of a DC power output by the power supply 120 (PW_DET signal monitoring).

According to an embodiment, if the size of the DC power is smaller than the threshold value (e.g., if the size of the DC power is identified to be smaller than the threshold value based on a PW_DET signal), the at least one processor 130 transmits a detection signal to the controller 12.

According to an embodiment, the at least one processor 230 included in the second display apparatus 200 may monitor the size of a DC power output by the power supply 220 (PW_DET signal monitoring).

According to an embodiment, if the size of the DC power is smaller than the threshold value (e.g., if the size of the DC power is identified to be smaller than the threshold value based on a PW_DET signal), the at least one processor 230 may transmit a detection signal to the controller 12.

The controller 12 receives a detection signal from each of the plurality of display apparatuses 11. According to an embodiment, if a detection signal is received from any one display apparatus among the plurality of display apparatuses 11, the controller 12 may transmit a control signal to each of the plurality of display apparatuses 11.

According to an embodiment, if an initial detection signal is received from the first display apparatus 100 among the plurality of display apparatuses 11, the controller 12 may transmit a control signal to each of the plurality of display apparatuses 11. As another example, if an initial detection signal is received from the second display apparatus 200 among the plurality of display apparatuses 11, the controller 12 may transmit a control signal to each of the plurality of display apparatuses 11.

According to an embodiment, if a control signal is received from the controller 12, the at least one processor 130 turns off (or, blocks or disables) supply of the DC power output by the power supply 120 to the at least one display module 110.

According to an embodiment, if a control signal is received from the controller 12 before a DC power smaller than the threshold value is detected, the at least one processor 130 may turn off supply of the DC power to the at least one display module 110 based on the control signal.

For example, the at least one processor 230 included in the second display apparatus 200 may detect a DC power smaller than the threshold value before the at least one processor 130 included in the first display apparatus 100 detects a DC power smaller than the threshold value, and if an initial detection signal is received from the second display apparatus 200 among the plurality of display apparatuses 11, the controller 12 may transmit a control signal to each of the plurality of display apparatuses 11. However, this is merely an example for the convenience of explanation, and the at least one processor 130 included in the first display apparatus 100 may detect a DC power smaller than the threshold value before the at least one processor 230 included in the second display apparatus 200 detects a DC power smaller than the threshold value, and if an initial detection signal is received from the first display apparatus 100 among the plurality of display apparatuses 11, the controller 12 can obviously transmit a control signal to each of the plurality of display apparatuses 11.

According to an embodiment, the controller 12 may identify a display apparatus that is turned off first among the plurality of display apparatuses 100, 200, ... based on an initial detection signal.

According to an embodiment, when an initial detection signal is received, as it is a time point when any one display apparatus among the plurality of display apparatuses 11 is turned off (a time point when a brown-out is generated), the controller 12 may transmit a control signal for turning off all of the plurality of display apparatuses 11.

Each of the plurality of display apparatuses 11 that received the control signal from the controller 12 stops supply of the DC power, such that the DC power output by a corresponding power supply is not supplied to at least one display module.

Referring to FIG. 5, the at least one processor 130 included in the first display apparatus 100 may block supply of a DC power to the at least one display module 110 (disable supply of a module power) based on a control signal (PW_DET Low) received from the controller 12. The at least one processor 230 included in the second display apparatus 200 may also block supply of a DC power to the at least one display module 210 (disable supply of a module power) based on a control signal (PW_DET Low) received from the controller 12.

According to an embodiment, each of the plurality of display apparatuses 11 may block supply of a DC power based on a control signal before a DC power smaller than the threshold value is detected, and thus time points when each of the plurality of display apparatuses 11 stops supply of a DC power to at least one corresponding display module can be made to coincide. According to an embodiment, a phenomenon can be prevented, according to which each of the plurality of areas in the screen of the modular display apparatus 10 has a different brightness.

Referring to FIG. 5, for the convenience of explanation, a flow of a detection signal was illustrated with a relatively thin arrow, and a flow of a control signal was illustrated with a relatively thick arrow.

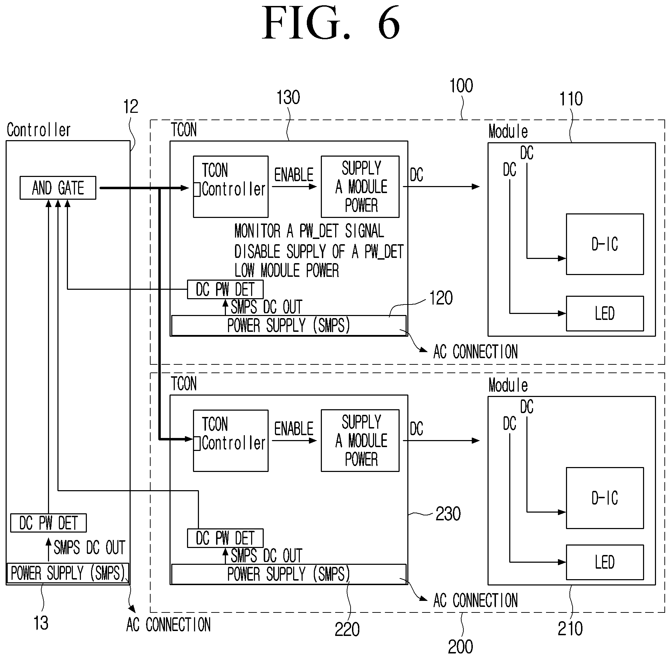

FIG. 6 is a diagram for illustrating a detection signal of a controller according to an embodiment of the disclosure.

In FIG. 5, an embodiment wherein the controller 12 receives a detection signal from each of the plurality of display apparatuses 11 was described, but as illustrated in FIG. 6, the controller 12 may detect whether a DC power output by the power supply 13 included in the controller 12 is smaller than the threshold value, and if the DC power output by the power supply 13 is smaller than the threshold value, the controller 12 may receive a detection signal.

For example, the controller 12 may turn off reception of an AC power of the modular display apparatus 10 (e.g., turn off reception of an AC power according to a user input), and then, if a DC power smaller than the threshold value is detected based on a DC power output by the power supply 13 included in the controller 12 before receiving a detection signal from any one display apparatus among the plurality of display apparatuses 11, the controller 12 may acquire a detection signal. Then, the controller 12 may transmit a control signal (PW_DET Low) to each of the plurality of display apparatuses 11 based on the detection signal.

According to an embodiment, if a control signal is received from the controller 12 before transmitting a detection signal to the controller 12, each of the plurality of display apparatuses 11 may not transmit a detection signal to the controller 12 even if a DC power smaller than the threshold value is detected. For example, after the controller 12 received an initial detection signal from any one display apparatus among the plurality of display apparatuses 11, and transmitted a control signal to each of the plurality of display apparatuses 11 based on the received initial detection signal, the controller 12 does not need to additionally receive a detection signal.

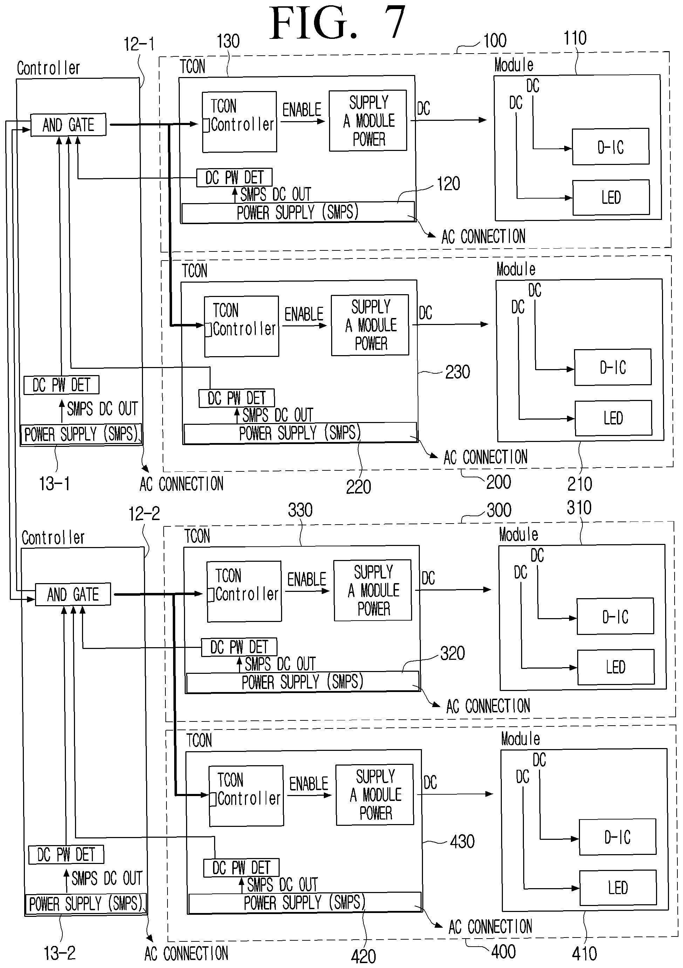

FIG. 7 is a diagram for illustrating a flow of a control signal among a plurality of controllers according to an embodiment of the disclosure.

In the aforementioned embodiment, a case wherein the modular display apparatus 10 includes one controller 12 was assumed, for the convenience of explanation, but the disclosure is obviously not limited thereto.

As an example, the modular display apparatus 10 may include a plurality of controllers (e.g., a first controller 12-1 and a second controller 12-2).

According to an embodiment, the first controller 12-1 may control some of the plurality of display apparatuses (e.g., the first display apparatus 100 and the second display apparatus 200), and the second controller 12-2 may control the other display apparatuses (e.g., the third display apparatus 300 and the fourth display apparatus 400).

According to an embodiment, if a detection signal is received from any one display apparatus among some display apparatuses, the first controller 12-1 may transmit a control signal to each of some display apparatuses.

For example, if a detection signal is received from the first display apparatus 100 from among the first display apparatus 100 and the second display apparatus 200, the first controller 12-1 may transmit a control signal to each of the first display apparatus 100 and the second display apparatus 200.

According to an embodiment, the first controller 12-1 that received the detection signal from the first display apparatus 100 may transmit a control signal to the second controller 12-2.

According to an embodiment, when the control signal is received from the first controller 12-1, the second controller 12-2 may transmit the control signal to each of the other display apparatuses (e.g. the third display apparatus 300 and the fourth display apparatus 400).

In the aforementioned embodiment, a case wherein the first controller 12-1 transmits a control signal to the second controller 12-2 was assumed, for the convenience of explanation, but an embodiment on the contrary can obviously be possible.

For example, if a detection signal is received from the third display apparatus 300 from among the third display apparatus 300 and the fourth display apparatus 400, the second controller 12-2 may transmit a control signal to each of the third display apparatus 300 and the fourth display apparatus 400.

According to an embodiment, the second controller 12-2 that received the detection signal from the third display apparatus 300 may transmit a control signal to the first controller 12-1.

According to an embodiment, when the control signal is received from the second controller 12-2, the first controller 12-1 may transmit the control signal to each of some display apparatuses (e.g., the first display apparatus 100 and the second display apparatus 200).

According to an embodiment, if any one controller (e.g., the first controller 12-1) among the plurality of controllers (e.g., the first controller 12-1 and the second controller 12-2) receives a detection signal, the any one controller may transmit a control signal to the other controller (e.g., the second controller 12-2).

According to an embodiment, the other controller that received the control signal may transmit the control signal to each of the display apparatuses controlled by the other controllers. Also, according to an embodiment, the plurality of controllers (e.g., the first controller 12-1 and the second controller 12-2) may share the control signal with each other.

According to an embodiment, each of some display apparatuses controlled by the first controller 12-1 and the other display apparatuses controlled by the second controller 12-2 may block supply of a DC power based on a control signal before a DC power smaller than the threshold value is detected. Accordingly, a time point when supply of a DC power to at least one display module corresponding to some display apparatuses is stopped and a time point when supply of a DC power to at least one display module corresponding to the other display apparatuses is stopped may be made to coincide. According to an embodiment, a phenomenon can be prevented, according to which each of the plurality of areas in the screen of the modular display apparatus 10 has a different brightness.

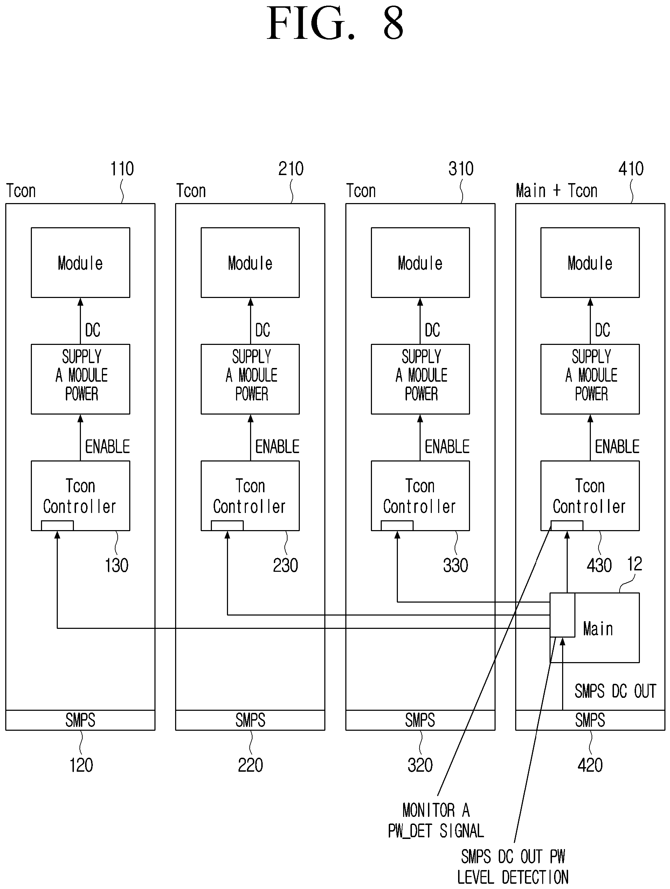

FIG. 8 is a diagram for illustrating a rear surface of a modular display apparatus according to an embodiment of the disclosure.

FIG. 8 is a diagram that illustrates the rear surface of the modular display apparatus 10 when the screen wherein the modular display apparatus 10 outputs a content is the front surface of the modular display apparatus 10. FIG. 8 is a block diagram that illustrates the plurality of power supplies 120, 220 and the controller 12 (Main in FIG. 8) excluding the rear surface cover of the modular display apparatus 10, for the convenience of explanation.

As an example, at least one display apparatus (e.g., the fourth display apparatus 400) among the plurality of display apparatuses 11 may include a controller 12.

As an example, the power supply included in the at least one display apparatus may supply a DC power to the controller 12 and at least one display module and at least one processor included in the at least one display apparatus.

According to a user input, the controller 12 may turn off reception of an AC power of each of the plurality of power supplies 120, 220.

According to an embodiment, if the power supply 120 included in the first display apparatus 100 does not receive an AC power, a DC power received by the at least one display module 110 included in the first display apparatus 100 may be gradually reduced. According to an embodiment, if an initial detection signal is received from any one display apparatus (e.g., the first display apparatus 100) among the plurality of display apparatuses 11, the controller 12 may perform control such that at least one display module corresponding to each of the plurality of display apparatuses 11 does not receive a DC power, and can thereby prevent a phenomenon, according to which each of the plurality of areas in the screen has a different brightness.

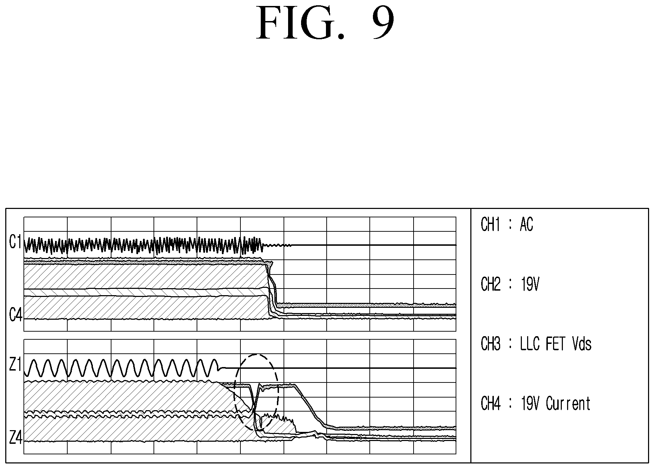

FIG. 9 is a graph for illustrating a change of a direct current power according to an embodiment of the disclosure.

As illustrated in the graph in the lower part of FIG. 9, if a DC power output by a power supply included in any one display apparatus is reduced, at least one processor included in the any one display apparatus may identify the DC power smaller than the threshold value. Here, the threshold value can obviously be changed variously according to the set value of the manufacturer, etc.

Meanwhile, as illustrated in the graph in the upper part of FIG. 9, a DC power output by a power supply included in another display apparatus is reduced relatively slowly, and thus at least one processor included in the other display apparatus may identify the DC power smaller than the threshold value relatively slowly.

According to an embodiment, if a DC power smaller than the threshold value is identified, at least one processor included in any one display apparatus may transmit a detection signal to the controller 12 of the modular display apparatus 10.

When an initial detection signal is received from any one processor among the plurality of display apparatuses 11, the controller 12 may transmit a control signal to each of the plurality of display apparatuses 11.

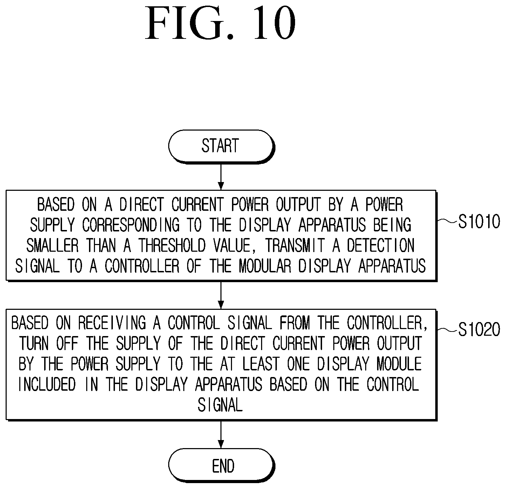

FIG. 10 is a flow chart for illustrating a control method of a display apparatus according to an embodiment of the disclosure.

In a control method of a display apparatus included in a modular display apparatus consisting of a plurality of display apparatuses, if a DC power output by a power supply corresponding to the display apparatus is smaller than a threshold value, a detection signal is transmitted to a controller of the modular display apparatus in operation S1010.

When a control signal is received from the controller, the supply of the DC power output by the power supply to at least one display module included in the display apparatus is turned off based on the control signal in operation S1020.

According to an embodiment, the turning-off operation S1020 includes the step of, based on receiving the control signal from the controller before detecting the DC power smaller than threshold value, turning off the supply of the DC power to the at least one display module based on the control signal.

According to an embodiment, each of the plurality of display apparatuses may include a power supply, and the control method may further include the step of each of the plurality of power supplies converting an AC power into a DC power, and supplying the DC power to at least one display module included in a corresponding display apparatus.

According to an embodiment, when the reception of the AC power is turned off according to a user input, the DC power output by the power supply may be reduced, and the turning-off operation S1020 may include the step of, based on receiving the control signal, turning off the supply of the DC power to the at least one display module based on the control signal before supply of the DC power is stopped.

According to an embodiment, the control method may further include the step of, based on the control signal not being received, driving the at least one display module while the power supply outputs the DC power.

Meanwhile, the various embodiments of the disclosure can obviously be applied not only to display apparatuses, but also to electronic apparatuses of all types including a display.

Meanwhile, the various embodiments described above may be implemented in a recording medium that can be read by a computer or an apparatus similar to a computer, by using software, hardware, or a combination thereof. In some cases, the embodiments described in this specification may be implemented as a processor itself. According to implementation by software, the embodiments such as processes and functions described in this specification may be implemented as separate software modules. Each of the software modules can perform one or more functions and operations described in this specification.

Meanwhile, computer instructions for performing processing operations of a display apparatus according to the aforementioned various embodiments of the disclosure may be stored in a non-transitory computer-readable medium. Computer instructions stored in such a non-transitory computer-readable medium make the processing operations at the display apparatus 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and a memory. As specific examples of a non-transitory computer-readable medium, there may be a CD, a DVD, a hard disc, a blue-ray disc, a USB, a memory card, a ROM, and the like.

A display apparatus included in a modular display apparatus consisting of a plurality of display apparatuses comprises: at least one display module; a power supply that supplies a direct current power to the at least one display module; and at least one processor configured to: based on the direct current power output by the power supply being smaller than a threshold value, transmit a detection signal to a controller of the modular display apparatus, and based on receiving a control signal from the controller, turn off the supply of the direct current power output by the power supply to the at least one display module based on the control signal.

According to an embodiment the at least one processor is configured to: based on receiving the control signal from the controller before detecting the direct current power smaller than threshold value, turn off the supply of the direct current power to the at least one display module based on the control signal.

According to an embodiment each of the plurality of display apparatuses comprises a power supply, and each of the plurality of power supplies converts an alternating current power into a direct current power, and supplies the direct current power to at least one display module included in a corresponding display apparatus.

According to an embodiment the controller is configured to: based on receiving a user input for turning off the modular display apparatus, turn off reception of the alternating current power of the power supply included in each of the plurality of display apparatuses.

According to an embodiment, based on the reception of the alternating current power being turned off according to the user input, the direct current power output by the power supply is reduced, and the at least one processor is configured to: based on receiving the control signal, turn off the supply of the direct current power to the at least one display module based on the control signal before supply of the direct current power to the at least one processor is stopped.

According to an embodiment the at least one processor is configured to: based on the control signal not being received, drive the at least one display module while the power supply outputs the direct current power.

According to an embodiment the at least one processor comprises: a timing controller (T-CON), and the at least one display module comprises: a plurality of driver ICs and a plurality of light-emitting elements.

A control method of a display apparatus included in a modular display apparatus consisting of a plurality of display apparatuses, comprises: based on the direct current power output by a power supply corresponding to the display apparatus being smaller than a threshold value, transmitting a detection signal to a controller of the modular display apparatus; and based on a control signal being received from the controller, turning off the supply of the direct current power output by the power supply to at least one display module included in the display apparatus based on the control signal.

According to an embodiment the turning off comprises: based on receiving the control signal from the controller before detecting the direct current power smaller than threshold value, turning off the supply of the direct current power to the at least one display module based on the control signal.

According to an embodiment each of the plurality of display apparatuses comprises a power supply, and the control method further comprises: each of the plurality of power supplies converting an alternating current power into a direct current power, and supplying the direct current power to at least one display module included in a corresponding display apparatus.

According to an embodiment, based on the reception of the alternating current power being turned off according to the user input, the direct current power output by the power supply is reduced, and the turning off comprises: based on receiving the control signal, turning off the supply of the direct current power to the at least one display module based on the control signal before supply of the direct current power is stopped.

According to an embodiment the control method comprises: based on the control signal not being received, driving the at least one display module while the power supply outputs the direct current power.

A modular display apparatus comprises: a plurality of display apparatuses; and a controller, wherein each of the plurality of display apparatuses comprises: at least one display module, a power supply that supplies a direct current power to the at least one display module, and at least one processor, and the at least one processor is configured to: detect the direct current power output by the power supply, and based on the direct current power being smaller than a threshold value, transmit a detection signal to a controller of the modular display apparatus, and the controller is configured to: based on receiving the detection signal from the at least one processor included in any one display apparatus among the plurality of display apparatuses, transmit a control signal to each of the plurality of display apparatuses.

According to an embodiment the at least one processor included in each of the plurality of display apparatuses is configured to: based on receiving the control signal from the controller, turning off the supply of the direct current power output by the power supply to the at least one display module based on the control signal.

According to an embodiment the controller is configured to: based on receiving a user input for turning off the modular display apparatus, turn off reception of the alternating current power of the power supply included in each of the plurality of display apparatuses, and based on receiving the detection signal from any one display apparatus among the plurality of display apparatuses after turning off the reception of the alternating current power, transmit the control signal to each of the plurality of display apparatuses.

While preferred embodiments of the disclosure have been shown and described, the disclosure is not limited to the aforementioned specific embodiments, and it is apparent that various modifications can be made by those having ordinary skill in the art to which the disclosure belongs, without departing from the gist of the disclosure as claimed by the appended claims. Also, it is intended that such modifications are not to be interpreted independently from the technical idea or prospect of the disclosure.

## Claims

1. A display apparatus included in a modular display apparatus comprising:
at least one display module;
a power supply that supplies a direct current power to the at least one display module; and
at least one processor configured to:
based on a direct current power output by the power supply being smaller than a threshold value, transmit a detection signal to a controller of the modular display apparatus, and
based on receiving a control signal from the controller, turn off the supply of the direct current power output by the power supply to the at least one display module based on the control signal.

2. The display apparatus of claim 1,
wherein the at least one processor is configured to:
based on receiving the control signal from the controller before detecting the direct current power smaller than threshold value, turn off the supply of the direct current power to the at least one display module based on the control signal.

3. The display apparatus of claim 1,
wherein the display apparatus comprises the power supply, and
wherein the power supply is configured to convert an alternating current power into a direct current power, and to supply the direct current power to at least one display module.

4. The display apparatus of claim 3,
wherein the display apparatus is configured to:
based on receiving a user input for turning off the modular display apparatus, turn off reception of the alternating current power of the power supply.

5. The display apparatus of claim 4,
wherein, based on the reception of the alternating current power being turned off according to the user input, the direct current power output by the power supply is reduced, and
wherein the at least one processor is configured to:
based on receiving the control signal, turn off the supply of the direct current power to the at least one display module based on the control signal before supply of the direct current power to the at least one processor is stopped.

6. The display apparatus of claim 5,
wherein the at least one processor is configured to:
based on the control signal not being received, drive the at least one display module while the power supply outputs the direct current power.

7. The display apparatus of claim 1,
wherein the at least one processor comprises:
a timing controller, TCON, and
the at least one display module comprises:
a plurality of driver integrated circuits, ICs, and a plurality of light-emitting elements.

8. A method of controlling a display apparatus included in a modular display apparatus, the method comprising:
based on a direct current power output by a power supply of the display apparatus being smaller than a threshold value, transmitting a detection signal to a controller of the modular display apparatus; and
based on a control signal being received from the controller, turning off the supply of a direct current power output by the power supply to at least one display module included in the display apparatus based on the control signal.

9. The method of claim 8,
wherein the turning off comprises:
based on receiving the control signal from the controller before detecting the direct current power smaller than threshold value, turning off the supply of the direct current power to the at least one display module based on the control signal.

10. The method of claim 8,
wherein the at least one display apparatus comprises the power supply, and
the method further comprises:
the power supply converting an alternating current power into a direct current power, and supplying the direct current power to the at least one display module.

11. The method of claim 8,
wherein, based on the reception of the alternating current power being turned off according to the user input, the direct current power output by the power supply is reduced, and
the turning off comprises:
based on receiving the control signal, turning off the supply of the direct current power to the at least one display module based on the control signal before supply of the direct current power is stopped.

12. The method of claim 8, further comprising:
based on the control signal not being received, driving the at least one display module while the power supply outputs the direct current power.

13. A modular display apparatus comprising:
a plurality of display apparatuses; and
a controller,
wherein each of the plurality of display apparatuses comprises:
at least one display module, a power supply that supplies a direct current power to the at least one display module, and at least one processor, and
the at least one processor is configured to:
detect the direct current power output by the power supply, and
based on the direct current power being smaller than a threshold value, transmit a detection signal to a controller of the modular display apparatus, and
wherein the controller is configured to:
based on receiving the detection signal from the at least one processor included in any one display apparatus among the plurality of display apparatuses, transmit a control signal to each of the plurality of display apparatuses.

14. The modular display apparatus of claim 13,
wherein the at least one processor included in each of the plurality of display apparatuses is configured to:
based on receiving the control signal from the controller, turning off the supply of the direct current power output by the power supply to the at least one display module based on the control signal.

15. The modular display apparatus of claim 13,
wherein the controller is configured to:
based on receiving a user input for turning off the modular display apparatus, turn off reception of the alternating current power of the power supply included in each of the plurality of display apparatuses, and
based on receiving the detection signal from any one display apparatus among the plurality of display apparatuses after turning off the reception of the alternating current power, transmit the control signal to each of the plurality of display apparatuses.
